# EUROPÄISCHE PATENTSCHRIFT

(11) **EP 1 496 342 B1**
(45) Veröffentlichungstag und Bekanntmachung des Hinweises auf die Patenterteilung: **06.09.2006**
(21) Anmeldenummer: 03102030.8
(22) Anmeldetag: 07.07.2003
(51) Int. Cl.: G01G 23/00

(54) **Waage mit Stützfussvorrichtung**
Weighing apparatus with a device forming foot-support
Balance avec un dispostif formant pied d'appui

(43) Veröffentlichungstag der Anmeldung: 12.01.2005
(73) Patentinhaber: Mettler-Toledo AG, 8606 Greifensee (CH)
(72) Erfinder: Meister, Beat, 8606 Greifensee (CH); Leisinger, Roger, 8044 Zürich (CH)

(56) Entgegenhaltungen:
- FR-A- 726 156
- FR-A- 1 001 164
- GB-A- 1 160 274
- US-A- 5 148 892
- US-A- 5 332 182
- US-A- 5 490 648
- PATENT ABSTRACTS OF JAPAN vol. 1998, no. 06, 30. April 1998 (1998-04-30) & JP 10 048035 A (SHIMADZU CORP), 20. Februar 1998 (1998-02-20)

## Beschreibung

Die Erfindung betrifft eine Waage mit einem der Unterbringung der Wägemechanik und der Wägeelektronik dienenden Waagengehäuse, welche auf mindestens drei Stellfüssen auf einer Unterlage aufstellbar ist, wobei mindestens zwei der Stellfüsse für eine Nivellierung der Waage in ihrer Höhe verstellbar sind.

Solche Waagen finden ihren Einsatz vorzugsweise in Labors, in der Produktion oder im Lager. Insbesondere weisen solche Waagen eine grossflächige Waagschale auf und sind häufig auf drei an den Eckpunkten eines gleichschenkligen Dreiecks angeordneten Stellfüssen abgestützt. Bei dieser Art der Abstützung gerät im Fall von aussermittig aufgelegten Lasten oder sonstiger aussermittiger Belastung, das heisst einer Belastung ausserhalb der Kipplinie, die Waage sehr schnell in eine instabile Lage. Sie stützt sich dann nicht mehr auf den drei Stellfüssen ab und befindet sich daher nicht mehr in der richtigen Bezugslage.

Im Stand der Technik sind Waagen bekannt, beispielsweise solche der PR-Serie der Mettler-Toledo GmbH, welche sich auf drei Stellfüssen auf ihrer Unterlage abstützen, wobei zwei nahe den beiden Eckpunkte an der Vorderseite der Waage angebrachte Stellfüsse mittels einer Schraubanordnung in ihrer Höhe verstellbar sind. Mittels dieser Stellfüsse kann die Waage nivelliert werden, das heisst in eine Bezugslage gebracht werden, in welcher die Kraft einer auf der Waagschale aufgebrachten Last in Richtung der Schwerkraft wirkt. Ein dritter Stellfuss ist mittig, das heisst entlang der Zentrallinie an der Unterseite der Waage nahe ihrem hinteren Ende angebracht. Diese Waage besitzt nun, insbesondere wenn sie mit einer grossflächigen Waagschale ausgestattet ist, zwei weitere Füsse, sogenannte Stützfüsse, welche nach erfolgter Nivellierung durch Verdrehen, d.h. Herausschrauben aus einem Gewinde im Waagengehäuse soweit in ihrer Höhe verstellt werden, dass sie in Kontakt mit der Unterlage der Waage gelangen und somit die Waage auch an den beiden hinteren Eckpunkten abstützen. Die Waage kann somit auch bei aussermittig im hinteren Bereich aufgelegten Lasten nicht verkippen.

Nachteilig bei solchen schraubbaren Stützfüssen ist, dass die Position, in welcher die Stützfüsse mit der Unterlage in Kontakt gelangen, ungenau zu ermitteln ist und daher die Gefahr besteht, dass die Stützfüsse zu weit ausgefahren werden und sich die Stellfüsse geringfügig von der Unterlage abheben, was die Waage wieder aus ihrer Bezugslage bringt. Ebenso ist für den Benutzer die Drehrichtung bei einem solchen schraubbaren Stützfuss nicht auf Anhieb klar ersichtlich.

Die JP 10 048 035 A offenbart eine Waage, an deren mit einer Anzeige- und Bedieneinheit versehenen Vorderseite zwei Stellfüsse nahe den jeweiligen Ecken des Waagengehäuses angebracht sind, welche Stellfüsse für ein Nivellieren der Waage höhenverstellbar ausgestaltet sind. An der Rückseite ist am Waagengehäuse ein sich über nahezu die gesamte Waagenbreite erstreckender Hebel um einen mittigen Drehpunkt angebracht, welcher an seinen beiden äusseren Ende mit je einem Stützfuss versehen ist. Der Hebel kann an seinem Drehpunkt am Waagengehäuse fixiert oder für eine Drehbewegung gelöst werden. Das Fixieren und Lösen geschieht vorzugsweise mit einer Schraube, die im angezogenen Zustand, den Hebel gegen das Waagengehäuse drückt. Die Waage wird im gelösten Zustand des Hebels nivelliert, wobei sie sich dabei stets auf vier Füssen abstützt. Wenn die Waage sich in der richtigen Bezugslage befindet, wird durch Fixieren des Hebels die Bezugslage stabilisiert, wodurch die Waage im Betriebszustand sich weiterhin auf vier Füssen abstützt.

Nachteilig bei dieser Waage ist, dass das Fixieren des Hebels mittels einer Schraube erfolgt, wodurch im Moment des Fixierens noch ein Drehmoment auf den Hebel ausgeübt werden kann, somit die Waage eventuell wieder aus ihrer Bezugslage gerät. Ausserdem ist eine solche Anordnung äusserst vibrationsempfindlich, besonders wenn der Hebel nicht besonders steif ausgestaltet ist; für einen solchen steifen Hebel besteht allerdings ein erhöhter Platzbedarf.

Die Schrift FR 726 156 A offenbart eine auf drei Punkten mittels Standfüssen abgestützte tragbare Waage. Um nach einem Ortswechsel die Waage rasch wieder nivellieren zu können, sind zwei der drei Standfüsse in vertikaler Richtung beweglich ausgebildet, wobei jeweils ein Bolzen in einer Halterung gleitend geführt mittels Federkraft sich an einer Unterlage abstützt. Beim Nivelliervorgang wird eine an der Waage vorhandene Libelle zentriert, indem an entsprechender Stelle mit einer Hand auf die Waage gedrückt wird, wonach die beweglichen Standfüsse mittels einer Klemm-Vorrichtung festgestellt werden können.

Es ist daher Aufgabe der Erfindung für eine Waage, insbesondere für eine solche mit einer grossflächigen Waagschale, eine Vorrichtung zu schaffen, mit der in einfacher und sicherer Weise die Waage während und nach dem Nivellieren in ihrer Bezugslage stabilisiert ist.

Diese Aufgabe wird mit den Merkmalen des Anspruchs 1 gelöst.

Eine Waage mit einem der Unterbringung der Wägemechanik und der Wägeelektronik dienenden Waagengehäuse, welches auf mindestens drei Abstützpunkten, die als Stellfüsse ausgebildet sind, auf einer Unterlage steht, wobei mindestens zwei der Stellfüsse für eine Nivellierung der Waage in ihrer Höhe verstellbar sind, weist zusätzlich mindestens einen Stützfuss auf, welcher Kontakt zur Unterlage haltend zum Nivellieren lösbar und für eine Stabilisierung einer eingestellten Bezugslage der Waage fixierbar ausgestaltet ist. Ein Stellfuss ist hier im Sinne von der Aufstellung dienend zu verstehen.

Durch das Abstützen der Waage mit Hilfe eines oder mehrerer Stützfüsse, wird insbesondere für Waagen mit einer grossflächigen Waagschale, ein Abkippen der Waage bei a-zentrisch aufgelegtem Wägegut verunmöglicht.

In bevorzugter Weise wird der Kontakt des mindestens einen Stützfusses zur Unterlage mittels Federkraft gehalten.

Für das Halten, Führen, Fixieren und Lösen des mindestens einen Stützfusses weist die Waage eine Stützfussvorrichtung auf, welche bevorzugt an der Unterseite des Waagengehäuses angebracht und vorzugsweise von aussen befestigbar ist.

Mittels dieser Stützfussvorrichtung ist der mindestens eine Stützfuss lösbar und fixierbar, so dass während der Nivellierung der Waage diese sich auf mindestens vier Punkten abstützt, ohne überbestimmt zu sein, da der Stützfuss in seiner Höheneinstellung flexibel ist. Eine Stabilisierung einer einmal eingestellten Nivellierung erfolgt durch fixieren des Stützfusses, wobei diese fixierte Stellung stufenlos einstellbar ist. Ein weiterer Vorteil ist, dass die Stützfussvorrichtung einfach handhabbar und leichtgängig ist.

In bevorzugter Weise erfolgt die den Stützfuss fixierende Verbindung und das Lösen dieser Verbindung mittels eines Betätigungshebels. Insbesondere wird das Feststellen, d.h. das Fixieren des Stützfusses mittels einer Klemmverbindung bewirkt.

In einer bevorzugten Ausführungsform weist die Stützfussvorrichtung ein den Stützfuss umfassendes Biegegelenk, und der Betätigungshebel einen um sein Drehzentrum angeordneten Excenter auf, wobei die Klemmverbindung mittels einer durch den Excenter hervorgerufenen Abstandsänderung der an das Biegegelenk angrenzenden Teile, insbesondere einen Bügel und ein Befestigungsteil, entsteht.

In einer weiteren Ausführungsform weist die Stützfussvorrichtung einen Keil und eine mit diesem verbundene Blattfeder auf, wobei die Klemmverbindung durch Anpressen des Keils an den Stützfuss unter einer Vorspannung der Blattfeder bewirkt wird.

In besonders vorteilhafter Ausgestaltung wird in der Gebrauchslage der Waage der Stützfuss mittels einer Schraubfeder gegen die Unterlage gedrückt, wobei die Federkraft der Schraubfeder sowie deren durch das Gewicht der Waage bedingte Vorspannung derart bemessen sind, dass sie in gelöstem Zustand den Stützfuss stets in Kontakt mit der Unterlage halten, ohne die Stellfüsseder Waage von der Unterlage abzuheben. Insbesondere beträgt die Federkraft der Schraubfeder etwa drei Fünftel der durch das Gewicht der Waage auf die Schraubfeder wirkenden Kraft.

In einer bevorzugten Weiterbildung der Waage weisen zwei der Stellfüsse jeweils ein Rad für die Verstellung zur Nivellierung der Waage auf. Bevorzugterweise sind zwei Stellfüsse an der Vorderseite des Waagengehäuses angeordnet und einer mittig, nahe dem hinteren Ende des Waagengehäuses. Alternativ können auch die beiden höhenverstellbaren Stellfüsse nahe dem hinteren Ende des Waagengehäuses angeordnet sein und der dritte Stellfuss ist mittig nahe der Vorderseite der Waage angeordnet. Die Stützfussvorrichtungen sind seitlich des dritten Stellfusses angeordnet.

Die erfindungsgemässe Waage wird anhand eines in den Zeichnungen dargestellten Ausführungsbeispiels im folgenden näher erläutert. Es zeigen:
- Figur 1: eine Ansicht der Waage mit Anzeige- und Bedieneinheit in dreidimensionaler Darstellung,
- Figur 2: eine Ansicht der Waage von unten mit an der Unterseite angebrachten Stützfussvorrichtungen, auf der linken Seite in gelöstem Zustand des Stützfusses, rechts in fixiertem Zustand des Stützfusses,
- Figur 3: a) eine dreidimensionale Darstellung einer Stützfussvorrichtung in einer Ausführungsform gemäss Figur 2, b) eine Aufsicht auf die Stützfussvorrichtung, c) eine Seitenansicht der Stützfussvorrichtung, wobei deren Anordnung in Bezug auf das Waagengehäuse und die Unterlage im Schnitt gezeichnet ist,
- Figur 4: a) eine dreidimensionale Darstellung einer Stützfussvorrichtung in einer weiteren Ausführungsform, b) eine dreidimensionale Darstellung aus anderer Sicht.

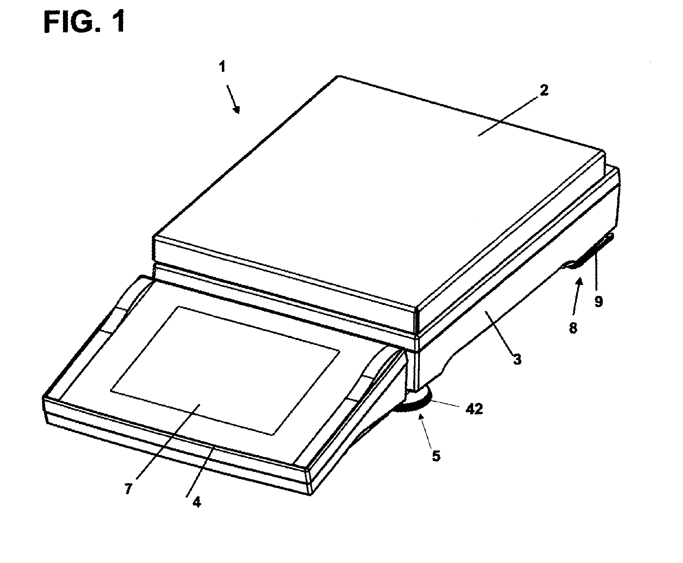

In der Figur 1 ist eine Waage 1 dargestellt, wie sie beispielsweise in einem Labor, in der Produktion oder in einem Lager stehen kann. Die Waage 1 weist ein Waagengehäuse 3 auf, worin die hier nicht sichtbare Wägezelle und die Wägeelektronik untergebracht ist. Die Waagschale 2 ist mit der Wägezelle verbunden. Sie erstreckt sich in dem in der Figur gezeigten Beispiel über nahezu die gesamte Ausdehnung des Waagengehäuses 3. Die Waage 1 steht auf drei Stellfüssen, von denen nur einer, mit der Bezugsziffer 5, in der Figur zu sehen ist. Dieser Stellfuss 5 weist, wie auch der nicht sichtbare, zweite an der Vorderseite der Waage angebrachte Stellfuss ein Rad 42 auf, mit dem der Stellfuss für eine Nivellierung der Waage höhenverstellt werden kann. Die Höhenverstellung erfolgt mittels Ein- und Ausschrauben des jeweiligen Stellfusses 5 in das Waagengehäuse 3 und aus diesem. Eine Anzeige- und Bedieneinheit 4 ist mit der Waage 1 verbunden. Sie verfügt über einen Bildschirm 7 und Tasten für die Bedienung der Waage 1.

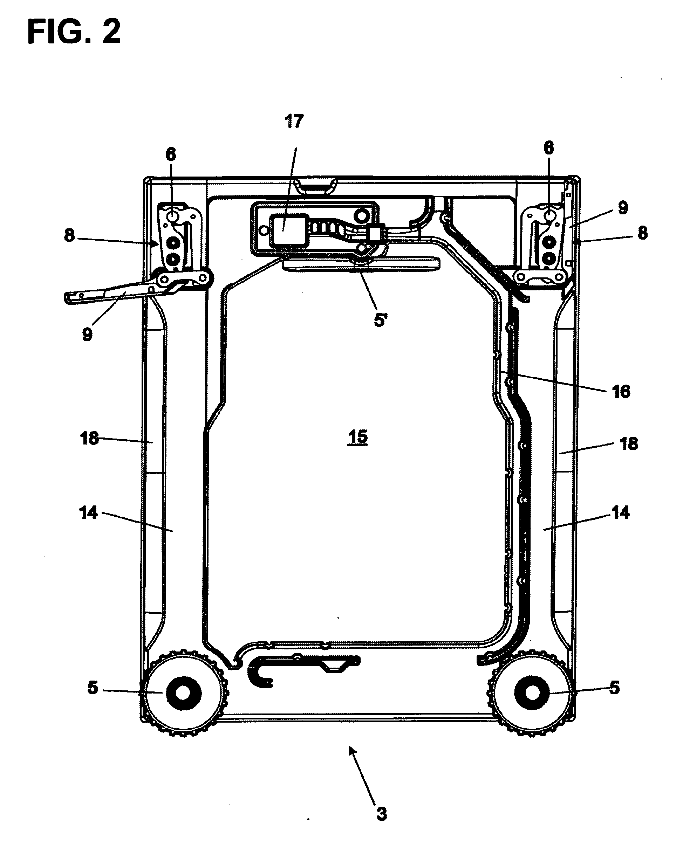

An dem der Anzeige- und Bedieneinheit 4 abgewandten Ende der Waage 1 ist eine Stützfussvorrichtung 8 zu erkennen. Insbesondere ist ein Betätigungshebel 9 sichtbar, der, wie weiter unten näher erläutert wird, dem Lösen und Fixieren eines hier nicht sichtbaren Stützfusses dient. Die in der Figur 2 gezeigte Waage 1 verfügt auf jeder Seite, nahe dem hinteren Eckpunkt über eine solche Stützfussvorrichtung 8.

In der Figur 2, die eine Ansicht der Unterseite der Waage 1 ohne Anzeige- und Bedieneinheit 4 zeigt, ist die Anordnung der drei Stellfüsse 5, 5' zu erkennen. Eine Führungsrinne 16 für die Führung von nicht benötigter Kabellänge eines hier nicht gezeigten Verbindungskabels zwischen der Waage 1 und der an der Waage 1 befestigbaren Anzeige- und Bedieneinheit 4 (siehe Figur 1) ist ebenfalls an der Unterseite angeordnet. Das Kabel hat zum Inneren des Waagengehäuses 3 über einen Schacht 17 Zugang.

Der zentrale Bereich 15 der Unterseite des Waagengehäuses 3 ist gegenüber dem Randbereich 14 der Unterseite überstehend ausgestaltet. Das Waagengehäuse 3 weist beidseitig auch noch Griffmulden 18 auf, so dass ein einfaches Anfassen beim Anheben der Waage 1 von ihrer Unterlage ermöglicht wird. Der am zentralen Bereich 15 der Unterseite des Waagengehäuses 3 angebrachte dritte Stellfuss 5' hat hier die Form einer Rippe mit dreieckförmigem Profil. Selbstverständlich sind auch andere Ausgestaltungen für den Stellfuss 5' denkbar, beispielsweise eine Ausgestaltung als ein einfacher Zapfen.

Rechts und links vom dritten Stellfuss 5', nahe den hinteren Eckpunkten der Waage ist jeweils eine Stützfussvorrichtung 8 angebracht, wobei die Stützfussvorrichtungen spiegelbildlich zueinander angeordnet sind. Die in der Figur 2 links gezeigte Stützfussvorrichtung 8 befindet sich im gelösten Zustand des Stützfusses 6, da der Hebel 9 vom Waagengehäuse 3 abgespreizt ist. Die in der Figur 2 rechts gezeigte Stützfussvorrichtung 8 hingegen befindet sich im fixierten Zustand des Stützfusses 6, da der Hebel 9 am Waagengehäuse 3 anliegt. Im hier gezeigten Beispiel ragen bei der am Waagengehäuse 3 angebrachten Stützfussvorrichtung 8 mit fixiertem Stützfuss 6 seitlich keine Teile über das Waagengehäuse 3 hinaus.

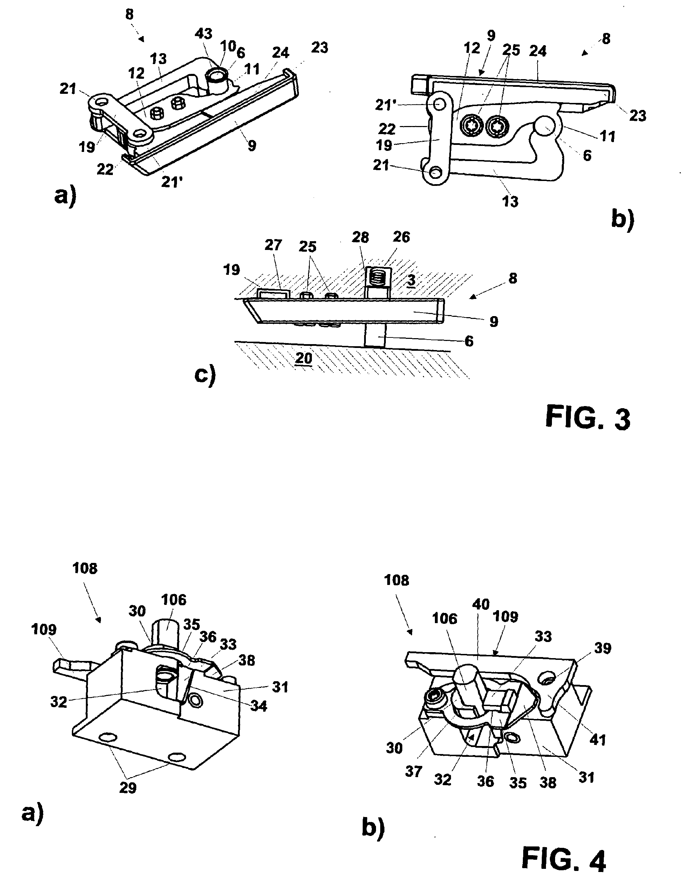

Die Figuren 3a bis 3c zeigen die in der Figur 2 dargestellte Ausführungsform einer Stützfussvorrichtung 8 im Detail aus verschiedenen Ansichten, wobei Figur 3c noch die Lage der Vorrichtung 8 in Bezug auf das Waagengehäuse 3 und die Unterlage der Waage 1 zum Ausdruck bringt. Die entsprechenden Teilbereiche der Unterlage 20 und das Waagengehäuse 3 sind hier im Schnitt dargestellt.

In Figur 3a ist eine perspektivische Sicht auf die Stützfussvorrichtung 8 von schräg oben, also auf diejenige Seite, die im montierten Zustand dem Waagengehäuse 3 zugewandt ist, dargestellt. Der Stützfuss 6 weist an seinem dem Waagengehäuse 3 zugewandten Ende eine von einem Kragen 43 umgebene Vertiefung 10 auf, in welche eine zwischen Waagengehäuse 3 und Vertiefung 10 vorgespannte Schraubfeder eingreift, die den Stützfuss 6 im gelösten Zustand nach unten auf die Unterlage 20 drückt. (siehe Figur 3c). Der Kragen 43 weist einen geringfügig grösseren Durchmesser auf, als der Stützfuss 6 selbst, so dass, beispielsweise bei fehlender Unterlage der Stützfuss 6 im gelösten Zustand nicht aus der Stützfussvorrichtung 8 fallen kann. Die Stützfussvorrichtung 8 umfasst einen an einem Biegegelenk 11 mit dem Befestigungsteil 12 verbundenen Bügel 13. Wird der Bügel 13 an seinem anderen Ende angespannt, so wird der Stützfuss 6 zwischen Bügel 13 und Befestigungsteil 12 eingeklemmt und somit fixiert. Das dem Stützfuss 6 abgewandte Ende des Bügels 13 ist mit dem Betätigungshebel 9 über eine Lascheanordnung verbunden, wobei sowohl bügelseitig als auch hebelseitig die Verbindung gelenkig ist. Die Laschenanordnung besteht aus zwei Laschen 19, welche über zwei etwa an dem jeweiligen Laschenende angeordnete Verbindungsbolzen 21, 21' miteinander verbunden sind. Befestigungsteil 12 und Bügel 13 greifen beide von innen in die Laschenanordnung ein. Insbesondere befindet sich das stützfussferne Ende des Bügels 13 in Kontakt mit dem Verbindungsbolzen 21 und umgreift diesen teilweise. Der zweite Verbindungsbolzen 21' bildet den Drehpunkt des Betätigungshebels 9. Der Betätigungshebel 9 ist derart geformt, dass seine der Stützfussvorrichtung 8 zugewandte Innenfläche formschlüssig am Befestigungsteil 12 anliegt (siehe Figur 3b).

Der Betätigungshebel 9 weist an der Stelle seines Drehpunktes, um diesen angeordnet einen Excenter 22 auf, an welchem das stützfussferne Ende des Befestigungsteils 12 anliegt. Wird nun der Betätigungshebel 9 an seinem Griffende 23 nach aussen gezogen, d.h. in der Figur 3a im Uhrzeigersinn um seinen Drehpunkt bewegt, so gelangt in zunehmendem Masse der kürzere Teil des Excenters 22 in Kontakt mit dem Befestigungsteil 12, wodurch sich der Abstand zwischen Bügel 13 und Befestigungsteil 12 vergrössert, demzufolge sich die Spannung des Bügels 13 verringert und somit die Klemmung des Stützfusses 6 zwischen Bügel 13, Biegegelenk 11 und Befestigungsteil 12 gelöst wird. Wird der Hebel wieder an der Stützfussvorrichtung angelegt, gelangt der längere Teil des Excenters 22 in Kontakt mit dem Befestigungsteil 12, zieht die Laschenanordnung näher zum Hebel 9 und spannt damit den Bügel 13, so dass der Stützfuss 6 wieder festgeklemmt wird.

Figur 3b zeigt eine Sicht auf die Stützfussvorrichtung 8 von unten, also auf diejenige Seite, die im montierten Zustand dem Waagengehäuse 3 abgewandt ist. Hier ist zu erkennen, wie Bügel 13, Biegegelenk 11 und Befestigungsteil 12 den Stützfuss 6 umfassen, so dass es einer geringen Spannung des Bügels 13 bedarf, um ihn festzuklemmen. Der Befestigungshebel 9 ist mit einer Blende 24 versehen, die aus Gründen der Ergonomie aus einem Polymermaterial gefertigt ist. Der Hebel 9 mit der Blende 24 ist länger als der Bügel 13 und das Befestigungsteil 12, so dass ein Benutzer mit einem Finger eingreifen kann, um den Hebel 9 zu betätigen. Die Schrauben 25 dienen der Befestigung der Stützfussvorrichtung 8 am Waagengehäuse 3, wobei diese in entsprechende Gewindelöcher an der Unterseite des Waagengehäuses 3 eingeschraubt werden.

In Figur 3c, welche eine Seitenansicht der Stützfussvorrichtung 8 zeigt, ist deren Anordnung in Bezug auf das Waagengehäuse 3 und die Unterlage 20 im Schnitt gezeichnet. Hier ist zu sehen, wie die Stützfussvorrichtung 8 zwischen dem Waagengehäuse 3 und der Unterlage 20, auf welcher die Waage 1 steht, angeordnet ist. Die Stützfussvorrichtung 8 ist am Waagengehäuse 3 mittels der Schrauben 25 befestigt. Die obere Lasche 19 der Laschenanordnung ragt in eine Ausnehmung 27 am Waagengehäuse 3 hinein. Eine Schraubfeder 26, welche mit dem Stützfuss 6 zusammen in einer weiteren Ausnehmung 28 des Waagengehäuses 3 positioniert ist, ist zwischen dem Stützfuss 6 und dem Waagengehäuse 3 vorgespannt. Wird nun im Falle einer für den Betrieb aufgestellten Waage 1 mit dem Betätigungshebel 9 der festgestellte Stützfuss 6 gelöst, wobei er unter der Wirkung von Federkraft und Schwerkraft sich weiter an der Unterlage 20 abstützt, so ist der Stützfuss 6 bezüglich Bügel 13, Biegegelenk 11 und Befestigungsteil 12 in vertikaler Richtung beweglich, wodurch sich der Abstand zwischen dem Waagengehäuse 3 und der Unterlage 20, zum Beispiel während einer Nivellierung der Waage 1, verändert. Durch Anlegen des Hebels 9 an die Stützfussvorrichtung 8 und damit Fixieren des Stützfusses 6 wird dieser in der betreffenden Lage stabilisiert. Auf diese Weise stützt sich die Waage 1 mit einer Anordnung der Stellfüsse 5, 5' und der Stützfüsse 6, wie sie in der Figur 2 gezeigt ist, in 5 Punkten auf ihrer Unterlage 20 ab, ohne, dass die Auflage dadurch überbestimmt wäre.

Es versteht sich von selbst, dass die Federkraft der Schraubfeder 26 sowie deren durch das Gewicht der Waage 1 bedingte Vorspannung derart bemessen sind, dass sie im gelösten Zustand den Stützfuss 6 stets den Kontakt mit der Unterlage 20 halten, jedoch nicht in der Lage sind, die Stellfüsse 5,5' der Waage 1 von der Unterlage abzuheben. Die Federkraft der Schraubfeder 26 beträgt einen Bruchteil der durch das Gewicht der Waage 1 auf die Schraubfeder 26 wirkenden Kraft, vorzugsweise etwa drei Fünftel derselben.

Die in den Figuren 3a bis 3c gezeigte Ausführungsform einer Stützfussvorrichtung 8 ist für eine Anordnung rechts und links am Waagengehäuse 3 vorgesehen. Es muss lediglich der bolzenförmige Stützfuss 6 in Bezug auf die Stützfussvorrichtung 8 gewendet werden, so dass die Vertiefung 10 stets dem Waagengehäuse 3 zugewandt ist. Die Blende 24 ist allerdings für eine Anordnung rechts oder links am Waagengehäuse 3 jeweils spezifisch ausgestaltet, was jedoch unproblematisch ist, da sie auf den Hebel 9 aufsteckbar ausgebildet ist.

Eine andere Ausführungsform einer erfindungsgemässen Stützfussvorrichtung 108 ist in den Figuren 4a und 4b zu sehen. Wie aus Figur 4a, die eine perspektivische Sicht auf die Stützfussvorrichtung 108 von schräg oben, also auf diejenige Seite, die im montierten Zustand dem Waagengehäuse 3 zugewandt ist, zeigt, besitzt diese Stützfussvorrichtung 108 ein Gehäuse 31, welches am Waagengehäuse 3 mittels durch Öffnungen 29 ragender Schrauben (hier nicht zu sehen) befestigbar ist. Der bolzenförmige Stützfuss 106 ist in einer Halterung 30, welche als Teil des Gehäuses 31 ausgebildet ist, in einer Richtung, das heisst im montierten Zustand und bei einer für den Betrieb aufgestellten Waage 1 vertikal beweglich. Hierfür ist in die Halterung 30 eine Gleitbahn eingearbeitet, welche den Stützfuss 106 etwa auf der Hälfte seines Umfangs umfasst. Das Gehäuse 31 verfügt über eine Aussparung 32, welche Raum für eine hier nicht gezeigte mit dem Stützfuss 106 verbundene und diesen gegen die Unterlage 20 drückende Schraubfeder und einen Teil des Stützfusses 106 selbst bietet und um dem Stützfuss 106 entsprechenden Hub zu gewähren.

Wie im Fall der Stützfussvorrichtung 8 gemäss Figur 3 ist auch hier die Federkraft in Bezug auf das Gewicht der Waage 1 derart bemessen, dass sie den Stützfuss 106 in Kontakt mit der Unterlage 20 hält, jedoch nicht in der Lage ist, die Stellfüsse 5,5' der Waage 1 von der Unterlage abzuheben.

Der Stützfuss 106 selbst besitzt keinen kreisförmigen Querschnitt, sondern ist an einander gegenüber liegenden Seiten abgeflacht. Dies verhindert einerseits ein Verdrehen des Stützfusses 106 und ermöglicht andererseits einen Flächenkontakt zu einem Keil 33, der dem Fixieren des Stützfusses 106 in seiner Halterung 30 dient. Dabei ist im gelösten Zustand der Keil 33 entlang einer abgeschrägten Fläche 34, die ins Innere des Gehäuses 31 weist, bewegbar. Eine Blattfeder 35, welche dem Feststellen des Stützfusses 106 dient, greift in eine Nut 36 des Keils 33 ein und ist somit formschlüssig mit diesem verbunden. Durch die Reibung zwischen dem flächigen Kontakt von Stützfuss 106 und Keil 33 einerseits, sowie Keil 33 und Fläche 34 andererseits wird ein komplettes Lösen des Stützfusses 106 aus der Stützfussvorrichtung 108 verhindert.

Die Figur 4b zeigt eine Ansicht auf die Stützfussvorrichtung 108 von schräg unten bezüglich deren Montage an der Unterseite des Waagengehäuses 3. Hier ist besonders gut zu erkennen, wie der Stützfuss 106 auf der einen Seite in seiner Gleitbahn 37 und auf der andere Seite durch den Keil 33 geführt ist. Die Blattfeder 35 ist derart gestaltet, dass sie den Stützfuss 106, samt der Halterung 30 mit der Gleitbahn 37 umgreift, in die Nut 36 des Keils eingreift und in der Zeichnung rechts vom Keil 33 einen etwa dreieckförmigen, leicht vom Stützfussgehäuse 31 weg gebogenen Ausleger 38 bildet.

Bei dem Betätigungshebel 109 handelt es sich hier um einen zweiarmigen Hebel, welcher um einen stützfussgehäusefesten Drehpunkt 39 bewegbar ist. Der lange Hebelarm 40 dient der Betätigung durch den Benutzer. Wird er an seinem drehpunktfemen Ende vom Stützfussgehäuse 31 weg, d.h. in der Abbildung 4b im Uhrzeigersinn, gezogen, so greift der kurze Hebelarm 41 unter den Ausleger 38 der Blattfeder 35 und zieht diese vom Stützfussgehäuse 31 weg. Damit wird auch der Keil in die selbe Richtung gezogen und gibt dadurch den Stützfuss 106 frei, welcher unter der Wirkung der Spiralfeder sich entlang der Gleitbahn 37 bewegen kann.

Die beschriebenen Stützfussvorrichtungen sind lediglich beispielhaft aus einer Vielzahl von möglichen Stützfussvorrichtungen entnommen und detailliert beschrieben worden. Der Erfindungsgedanke umfasst auch weitere Ausführungsformen, beispielsweise solche, in denen ein Stützfuss lediglich durch einen mit einem Excenter versehenen Hebel gehalten oder gelöst wird und den Kontakt mit einer Unterlage ausschliesslich unter der Wirkung der Schwerkraft gehalten wird. Ebenso kann ein Stüzfuss mittels eines in die Stützfussvorrichtung integrierten Motors ein - und ausgefahren werden und durch Blockieren des Motors festgestellt werden.

In einer Waage, bei der die Stellfüsse nicht an den Eckpunkten eines gleichschenkligen Dreiecks angeordnet sind, sondern etwa ein rechtwinkliges Dreieck bildend, nahe dreier Eckpunkte eines Waagengehäuses mit etwa rechteckiger Grundfläche angebracht sind, ist es nutzbringend, nahe dem vierten Eckpunkt eine erfindungsgemässe Stützfussvorrichtung anzuordnen, die beim Nivellieren und nach erfolgtem Nivellieren der Waage diese in ihrer eingestellten Lage stabilisiert.

### Bezugszeichenliste

- 1: Waage
- 2: Waagschale
- 3: Waagengehäuse
- 4: Anzeige- und Bedieneinheit
- 5, 5': Stellfuss
- 6, 106: Stützfuss
- 7: Bildschirm
- 8, 108: Stützfussvorrichtung
- 9, 109: Betätigungshebel, Hebel
- 10: Vertiefung
- 11: Biegegelenk
- 12: Befestigungsteil
- 13: Bügel
- 14: Randbereich
- 15: Zentraler Bereich
- 16: Führungsrinne
- 17: Schacht
- 18: Griffmulde
- 19: Lasche
- 20: Unterlage
- 21, 21': Verbindungsbolzen
- 22: Excenter
- 23: Griffende des Betätigungshebels
- 24: Blende
- 25: Schrauben
- 26: Schraubfeder
- 27: Ausnehmung
- 28: Ausnehmung
- 29: Öffnung
- 30: Halterung
- 31: Stützfussgehäuse, Gehäuse
- 32: Aussparung
- 33: Keil
- 34: Angeschrägte Fläche
- 35: Blattfeder
- 36: Nut
- 37: Gleitbahn
- 38: Ausleger
- 39: Drehpunkt
- 40: Langer Hebelarm
- 41: Kurzer Hebelarm
- 42: Rad
- 43: Kragen

## Patentansprüche

1. Waage (1) mit einem der Unterbringung der Wägemechanik und der Wägeelektronik dienenden Waagengehäuse (3), welche auf mindestens drei Stellfüssen (5, 5') auf einer Unterlage (20) steht, wobei mindestens zwei der Stellfüsse (5) für eine Nivellierung der Waage (1) in ihrer Höhe verstellbar sind, **dadurch gekennzeichnet, dass** zusätzlich zu den drei Stellfüssen (5,5') mindestens ein Stützfuss (6, 106) vorhanden ist, welcher Kontakt zur Unterlage (20) haltend zum Nivellieren lösbar und für eine Stabilisierung einer eingestellten Bezugslage der Waage (1) fixierbar ausgestaltet ist.

2. Waage nach Anspruch 1, **dadurch gekennzeichnet, dass** der mindestens eine Stützfuss (6, 106) den Kontakt zur Unterlage (20) mittels Federkraft hält.

3. Waage nach Anspruch 1 oder 2, **dadurch gekennzeichnet, dass** für das Halten, Führen, Fixieren und Lösen des Stützfusses (6, 106) eine Stützfussvorrichtung (8, 108) vorhanden ist, welche an der Unterseite des Waagengehäuses (3) befestigbar ist.

4. Waage nach Anspruch 3, **dadurch gekennzeichnet, dass** die Stützfussvorrichtung (8, 108) von aussen an das Waagengehäuse (3) anbringbar ist,

5. Waage nach einem der Ansprüche 1 bis 4, **dadurch gekennzeichnet, dass** die den Stützfuss (6, 106) fixierende Verbindung und das Lösen dieser Verbindung mittels eines Betätigungshebels (9, 109) erfolgt.

6. Waage nach einem der Ansprüche 1 bis 5, **dadurch gekennzeichnet, dass** das Feststellen des Stützfusses (6, 106) mittels einer Klemmverbindung bewirkt wird.

7. Waage nach Anspruch 6, **dadurch gekennzeichnet, dass** die Stützfussvorrichtung (8) ein den Stützfuss (6) umfassendes Biegegelenk (11), und der Betätigungshebel (9) einen um sein Drehzentrum angeordneten Excenter (22) aufweist, wobei die Klemmverbindung mittels einer durch den Excenter (22) hervorgerufenen Abstandsänderung der an das Biegegelenk (11) angrenzenden Teile, insbesondere einen Bügel(13) und ein Befestigungsteil (12), entsteht.

8. Waage nach Anspruch 6, **dadurch gekennzeichnet, dass** die Stützfussvorrichtung (108) einen Keil (33) und eine mit diesem verbundene Blattfeder (35) aufweist, wobei die Klemmverbindung durch Anpressen des Keils (33) an den Stützfuss (106) unter einer Vorspannung der Blattfeder (35) bewirkt wird.

9. Waage nach einem der Ansprüche 1 bis 8, **dadurch gekennzeichnet, dass** in der Gebrauchslage der Waage (1) der Stützfuss (6, 106) mittels einer Schraubfeder (26) gegen die Unterlage (20) gedrückt wird.

10. Waage nach Anspruch 9, **dadurch gekennzeichnet, dass** die Federkraft der Schraubfeder (26) sowie deren durch das Gewicht der Waage (1) bedingte Vorspannung derart bemessen sind, dass sie in gelöstem Zustand den Stützfuss (6, 106) stets in Kontakt mit der Unterlage (20) halten, ohne die Stellfüsse (5,5') der Waage (1) von der Unterlage abzuheben.

11. Waage nach Anspruch 10, **dadurch gekennzeichnet, dass** die Federkraft der Schraubfeder (26) einen Bruchteil der durch das Gewicht der Waage (1) auf die Schraubfeder (26) wirkenden Kraft beträgt.

12. Waage nach einem der Ansprüche 1 bis 11, **dadurch gekennzeichnet, dass** mindestens zwei der Stellfüsse (5) jeweils ein Rad (42) für die Verstellung zur Nivellierung der Waage (1) aufweisen

13. Waage nach einem der Ansprüche 3 bis 12, **dadurch gekennzeichnet, dass** zwei Stellfüsse (5) an der Vorderseite des Waagengehäuses (3) angeordnet, einer (5') mittig nahe dem hinteren Ende des Waagengehäuses (3) und dass die Stützfussvorrichtungen (8, 108) seitlich des dritten Stellfusses (5') angeordnet sind.

14. Waage nach einem der Ansprüche 1 bis 13, **dadurch gekennzeichnet, dass** die Waagschale (2) grossflächig ausgestaltet ist.

## Claims

1. Balance (1) with a housing (3) serving to enclose a weighing mechanism and an electronic assembly that stands on at least three positioning feet (5, 5') on a supporting surface (20), wherein at least two of the positioning feet (5) being height-adjustable for setting the balance (1) into a level position, **characterized in that** at least one stabilizer foot (6, 106) is provided in addition to the three positioning feet (5, 5') which is configured to be releasable for setting of the balance (1) into the level position and thereby being enabled to remain in contact with the supporting surface (20), and can be locked in place to ensure that the balance is stable in said level position.

2. Balance according to claim 1, **characterized in that** the at least one stabilizer foot (6, 106) keeps contact with the supporting surface (20) by means of a spring force.

3. Balance according to claim 1 or 2, **characterized in that** a stabilizer foot device (8, 108) is provided serving to hold, guide, lock and release the at least one stabilizer foot (6, 106), wherein the stabilizer foot device (8, 108) is configured to be installed on an underside of the balance housing (3).

4. Balance according to claim 3, **characterized in that** the stabilizer foot device (8, 108) is configured to be mounted from outside of the balance housing (3).

5. Balance according to any of claims 1 to 4, **characterized in that** locking and releasing of the at least one stabilizer foot (6, 106) is accomplished by means of an actuating lever (9, 109).

6. Balance according to any of claims 1 to 5, **characterized in that** locking of the at least one stabilizer foot (6, 106) is effected by means of a clamp connection.

7. Balance according to claim 6, **characterized in that** the stabilizer foot (8) device comprises a flexure pivot (11) that reaches around the stabilizer foot (6), and that the actuating lever (9) comprises a cam (22) that is eccentrically contoured relative to its center of rotation wherein a clamp-tightening action results from said cam (22) changing a gap between the parts, in particular a clamping jaw (13) and a mounting part (12), adjoining to the flexure pivot.

8. Balance according to claim 6, **characterized in that** the stabilizer foot device (108) comprises a wedge block (33) connected to a leaf spring (35), wherein a clamp-tightening action results from the wedge block (33) being pushed against the stabilizer foot (106) by a pre-tension force of said leaf spring (35).

9. Balance according to any of claims 1 to 8, **characterized in that**, when the balance (1) is set up in its operating position, the stabilizer foot (6, 106) is pushed against the supporting surface (20) by means of a helix spring (26).

10. Balance according to claim 9, **characterized in that** the spring force of the helix spring (26) as well as its pre-tension caused by the weight of the balance (1) are large enough to always push the stabilizer foot (6, 106) into contact with the support surface (20) when the stabilizer foot device is in its unlocked condition, but not so large as to lift the positioning feet (5, 5') of the balance (1) from the support surface (20).

11. Balance according to claim 10, **characterized in that** the spring force of the helix spring (26) equals a fractional amount of a force acting on the helix spring (26) by the weight of the balance(1).

12. Balance according to any of claims 1 to 11, **characterized in that** at least two of the positioning feet (5) comprise a turning wheel (42) that is operable for the setting of the balance (1) into the level position.

13. Balance according to any of claims 3 to 12, **characterized in that** two of the positioning feet (5) are arranged right and left of the centerline at the front the balance housing (3) and a third of the positioning feet (5') is arranged on the centerline at the rear, and that one each of the stabilizer foot devices (8, 108) is arranged right and left of the third of the positioning feet (5').

14. Balance according to any of claims 1 to 13, **characterized in that** the weighing pan (2) is designed to comprise a large area.

## Revendications

1. Balance (1) comprenant un boîtier de balance (3) servant au logement du mécanisme de pesage et de l'électronique de pesage, qui se trouve sur au moins trois pieds de position (5, 5') sur un support (20), au moins deux des pieds de position (5) pouvant être adjustés dans leur hauteur pour une mise à niveau de la balance (1), **caractérisée en ce qu'**en supplément des trois pieds de position (5, 5'), au moins un pied d'appui (6, 106) est présent, lequel est conçu de façon détachable pour la mise à niveau en gardant le contact avec le support (20) et pouvant être fixé pour une stabilisation d'une position de référence réglée de la balance (1).

2. Balance selon la revendication 1, **caractérisée en ce que** le au moins un pied d'appui (6, 106) maintient le contact avec le support (20) au moyen de la force de ressort.

3. Balance selon la revendication 1 ou 2, **caractérisée en ce qu'**un dispositif de pied d'appui (8, 108), qui peut être fixé sur le côté inférieur du boîtier de balance (3), est présent pour le maintien, le guidage, la fixation et le détachement du pied d'appui (6, 106).

4. Balance selon la revendication 3, **caractérisée en ce que** le dispositif de pied d'appui (8, 108) peut être placé par l'extérieur sur le boîtier de balance (3).

5. Balance selon l'une quelconque des revendications 1 à 4, **caractérisée en ce que** la liaison fixant le pied d'appui (6, 106) et le détachement de cette liaison s'effectuent au moyen d'un levier d'actionnement (9, 109).

6. Balance selon l'une quelconque des revendications 1 à 5, **caractérisée en ce que** le blocage du pied d'appui (6, 106) est effectué au moyen d'une liaison de blocage.

7. Balance selon la revendication 6, **caractérisée en ce que** le dispositif du pied d'appui (8) présente une articulation de pliage (11) comprenant le pied d'appui (6) et le levier d'actionnement (9) présente un excentrique (22) disposé autour de son centre de rotation, la liaison de blocage se formant au moyen d'une modification de distance, provoquée par l'excentrique (22), des parties contiguës à l'articulation de pliage (11), en particulier un étrier (13) et une partie de fixation (12).

8. Balance selon la revendication 6, **caractérisée en ce que** le dispositif de pied d'appui (108) présente une clavette (33) et un ressort à lame (35) relié à cette clavette et, la liaison de blocage étant effectuée par l'appui de la clavette (33) sur le pied d'appui (106) avec une pré-tension du ressort à lame (35).

9. Balance selon l'une quelconque des revendications 1 à 8, **caractérisée en ce que**, dans la position d'utilisation de la balance (1), le pied d'appui (6, 106) est pressé au moyen d'un ressort hélicoïdal (26) contre le support (20).

10. Balance selon la revendication 9, **caractérisée en ce que** la force du ressort hélicoïdal (26) et sa pré-tension due au poids de la balance (1) sont dimensionnées de telle sorte qu'elles maintiennent dans l'état détaché le pied d'appui (6, 106) toujours en contact avec le support (20), sans soulever les pieds de position (5, 5') de la balance du support.

11. Balance selon la revendication 10, **caractérisée en ce que** la force du ressort hélicoïdal (26) représente une fraction de la force agissant sur le ressort hélicoïdal (26) sous l'effet du poids de la balance (1).

12. Balance selon l'une quelconque des revendications 1 à 11, **caractérisée en ce qu'**au moins deux des pieds de position (5) présentent chacun une roue (42) pour le réglage pour la mise à niveau de la balance (1).

13. Balance selon l'une quelconque des revendications 3 à 12, **caractérisée en ce qu'**au moins deux pieds de position (5) sont disposés sur le côté avant du boîtier de balance (3), l'un (5') est disposé au centre à proximité de l'extrémité arrière du boîtier de balance (3) et que les dispositifs du pied d'appui (8, 108) sont disposés sur le côté du troisième pied de position (5').

14. Balance selon l'une quelconque des revendications 1 à 13, **caractérisée en ce que** le plateau (2) est conçu avec une grande surface.
